# EUROPÄISCHE PATENTSCHRIFT

(11) **EP 0 585 716 B1**
(45) Veröffentlichungstag und Bekanntmachung des Hinweises auf die Patenterteilung: **15.01.1997**
(21) Anmeldenummer: 93113116.3
(22) Anmeldetag: 16.08.1993
(51) Int. Cl.: B23H 7/02, B23H 7/04, B23H 7/06, B23H 7/10

(54) **Vorrichtung und Verfahren zum elektroerosiven Schneiden**
Method and apparatus for electroerosion cutting
Dispositif et procédé pour le découpage par électroérosion

(30) Priorität: 26.08.1992 DE 4228329
(43) Veröffentlichungstag der Anmeldung: 09.03.1994
(73) Patentinhaber: AG für industrielle Elektronik AGIE Losone bei Locarno, CH-6616 Losone/Locarno (CH)
(72) Erfinder: Bertholds, Axel, Dr., CH-6654 Cavigliano (CH); Braunschweiler, Andreas, CH-6614 Brissago (CH); Lodetti, Attilio, CH-6616 Losone (CH)
(74) Vertreter: Turi, Michael, Dipl.-Phys.

(56) Entgegenhaltungen:
- EP-A- 0 312 056
- EP-A- 0 468 451
- CH-A- 655 884
- DE-A- 3 926 972
- GB-A- 2 015 780
- TECHNISCHE RUNDSCHAU Bd. 84, Nr. 18 , 1. Mai 1992 , BERN CH Seiten 67 - 68 XP000268380 A. LOCHER 'Drahterosion mit Optionen für jeden Bedarf'

## Beschreibung

Die Erfindung betrifft eine Vorrichtung zum funkenerosiven Schneiden eines Werkstückes nach dem Oberbegriff des Anspruchs 1, sowie ein Verfahren nach dem Oberbegriff des Anspruches 8.

Derartige Vorrichtungen bzw. Maschinen oder Anlagen und Verfahren zum funkenerosiven Schneiden sind in den vielfältigsten Ausführungsformen bekannt. Eine Funkenerosions-Schneidvorrichtung weist üblicherweise folgende Grundelemente auf: ein Maschinengestell mit Antrieben und Drahtsystem, ein Spülsystem, einen Generator sowie eine NC- oder CNC-Rechnersteuerung. Ausgehend von einer Startbohrung oder einer Referenzfläche wird mit einer ersten Elektrode - dem Draht, d.h., der Drahtelektrode - eine Kontur in bzw. aus einer zweiten Elektrode - dem Werkstück - geschnitten.

Im Bearbeitungsbereich (bzw. in der Erodierzone) wird die Drahtelektrode sowohl mit kontrollierter Geschwindigkeit als auch mit definierter Zugspannung bewegt. Um eine zumindest weitgehend exakte Lage der Drahtelektrode zu gewährleisten, wird diese (i.A. beidseits des Werkstücks) in den bereits erwähnten Drahtführungen geführt, die üblicherweise in sogenannten "Führungsköpfen" angeordnet sind.

Ein Problem besonderer Art besteht beim funkenerosiven Schneiden in der Entwicklung von Drahtführungen, die für konische Schnitte Geeignet sind. Dies gilt insbesondere für Drahtführungen, die in fixen Führungsköpfen angeordnet sind. Für das Schneiden von Winkeln zwischen 0 und 45° haben sich hier klare Grenzen gezeigt. Bei Drahtführungen in sogenannten Schwenkköpfen treten diese Probleme weniger stark auf - Schwenkköpfe sind jedoch relativ teuer. Die gattungsbildende CH-A 655 884 offenbart Schwenkköpfe mit integrierten Führungen, wobei an der Austrittsöffnung des jeweiligen Schwenkkopfes ein Drahtlagesensor vorgesehen ist. Mit Hilfe des Drahtlagesensors ist die Lage der Drahtelektrode quer zu ihrer Längsachse bestimmbar. Die GB-A 2 015 780 offenbart einen Drahtlagesensor, der zwischen Führung und Werkstück angeordnet ist.

Die Erfindung zielt darauf ab, das elektroerosive Schneiden weiterzuentwickeln.

Dieses Ziel erreicht die Erfindung durch die Gegenstände der Ansprüche 1 bzw. 8.

Eine Grundidee der Erfindung besteht darin, die Drahtführung als geschlossene Führung auszulegen und die Drahtlage in der geschlossenen Führung durch einen Drahtlagesensor zu bestimmen. Der Drahtlagesensor ermöglicht eine hohe Schnittgenauigkeit trotz Verwendung der an sich weniger genauen geschlossenen Drahtführungen.

Drahtlagessnsoren sind beispielsweise von der Firma AGIE bekannt. Sie ermöglichen in Kombination mit einer entsprechenden Steuerungshard- und software eine präzise Führung der Drahtelektrode. Damit läßt sich beispielsweise ein Winkel bzw. eine Ecke bei hoher Genauigkeit besonders schnell schneiden. Derartige Drahtlagesensoren werden z.B, in der EP-0312056 beschrieben. Der Einsatz dieser Drahtlagesensoren erfolgte nach dem Stand der Technik in erster Linie in Kombination mit sogenannten "offenen V-Führungen". Nach der Erfindung ist ihr Einsatz jedoch auch bei geschlossenen Drahtführungen besonders sinnvoll. Es ist nämlich möglich, bei entsprechender Anordnung eines Drahtlagesensors die Lage der Drahtelektrode in der geschlossenen Drahtführung auszumessen. Dies löst insbesondere folgendes Problem geschlossener Drahtführungen: Nach dem Stand der Technik wurde bisher der Durchmesser geschlossener Führungen dem der Drahtelektrode so weit wie möglich angepaßt. Bei Verwendung einer Drahtelektrode geringeren Durchmessers war diese Anpassung jedoch problematisch, weil dann die Lage des Drahtes in der Führung nicht präzise bekannt war. Die Führung bzw. der Führungskopf mußte dann ausgetauscht werden. Dieses Austauschen kann erfindungsgemäß entfallen.

Ein weiterer Vorteil der Erfindung liegt in der Möglichkeit eines weitgehenden Einsatzes bereits vorhandener Software für den Drahtlagesensor. Die Software braucht lediglich um einige, der geschlossenen Drahtführung angepaßte, Routinen ergänzt zu werden.

Mit Hilfe des Drahtlagesensors läßt sich die Lage der Drahtelektrode in der geschlossenen Führung präzise bestimmen, so daß es erstmals möglich wird, geschlossene Drahtführungen - vorzugsweise in Toroidform - einzusetzen, deren Durchmesser größer ist als der der Drahtelektrode.

Der im Anspruch 1 verwendete Begriff "in unmittelbarer Nähe" beschreibt eine Position des Drahtlagesensors, in der es möglich ist, die Lage der Drahtelektrode in der offenen Drahtführung direkt ohne Berücksichtigung eines Bauchungsfaktors zu messen. Üblicherweise wird ein Drahtlagesensor nämlich dazu verwendet, die Bauchung einer Drahtelektrode während des Erosiven Schneidens zu bestimmen. Aus dieser Bauchungsmessung -die i.A. in der Nähe des Werkstückes durchgeführt wird - kann dann die Lage der Drahtelektrode im Werkstück berechnet werden.

Ist der Drahtlagesensor sehr weit von der Toroidführung entfernt angeordnet, ist es zwar möglich, die Lage des Erodierdrahtes noch relativ genau zu bestimmen - auch ohne daß die genaue Lage der Drahtelektrode in der Toroidführung bekannt ist. Ein besonders genaues Messergebnis läßt sich jedoch mit Hilfe einer zusätzlichen Messung der genauen Drahtlage im Toroid erzielen, denn die Lage des Drahtes in der Toroidführung (einseitig oder beidseitig des Werkstückes) ist dabei ein Referenzpunkt für die Drahtlageberechnung im Werkstück. Wenn der Drahtlagesensor relativ nahe zur Toroidführung angeordnet ist (und wenn er außerdem eine genügend große Messoberfläche) aufweist, ist es sogar möglich, mit einem Drahtlagesensor allein ein ausreichend genaues Messergebnis zu erhalten.

Die Genauigkeit der Erfindung kann u.a. durch die Anzahl der Drahtlagesensoren erhöht werden. Ist beispielsweise beidseits des zu schneidenden Werkstückes eine Toroidführung vorgesehen, kann bei hohen Anforderungen an die Präzision der Maschine auch beidseits des Werkstückes ein Drahtlagesensor vorgesehen sein.

Eine weitere Variante der Erfindung weist eine Drahteinfädel-Einrichtung auf, insbesondere nach Art einer Wasserstrahl-Einfädelung. Eine Wasserstrahleinfädelung war bisher bei geschlossenen Toroidführungen - wenn überhaupt - nur äußerst schwierig realisierbar. Ein Hauptvorteil offener Drahtführungen liegt nämlich in der Tatsache, daß in offene Drahtführungen im Gegensatz zu geschlossenen Drahtführungen Drahtelektroden mit beliebigem Durchmesser eingeführt werden können, ohne daß die Führungsköpfe ausgetauscht werden müssen. Geschlossene Drahtführungen waren dagegen bisher - wie bereits erwähnt - mit ihrem Durchmesser zur Gewährleistung einer präzisen Drahtführung dem Drahtdurchmesser anzupassen.

Bei modernen Erodiermaschinen bzw. Vorrichtungen sollte jedoch eine zumindest weitgehend automatische Drahteinfädeleinrichtung für den Transport des Drahtes vom "oberen" Führungskopf durch eine Startbohrung des Werkstückes zum unteren Führungskopf sorgen. Bei einer offenen Drahtführung ist es möglich, die Drahteinfädelung mit Hilfe eines Hochdruck-Wasserstrahles (der einen Kanal bildet) zu realisieren. Der Wasserstrahl führt den Draht bei einem Vorwärtsbewegen des Drahtes in Vorspulrichtung in der gewünschten Richtung vom oberen Führungskopf durch eine Startbohrung des Werkstückes zum unteren Führungskopf.

Bei geschlossenen Drahtführungen ließ sich ein Wasserstrahl entlang der Drahtführung (Durchmesser je nach Drahtdurchmesser 0.02 mm <= Ø <= 0.33 mm) bisher dagegen nicht realisieren, so daß für die Einfädelung des Drahtes vom oberen zum unteren Führungskopf andere Systeme in Betracht gezogen wurden.

So ist es beispielsweise bekannt, den Draht zu erhitzen, ihn unter Zug zum Reißen zu bringen und anschließend einzufädeln, indem der obere Führungskopf in z-Richtung bewegt und Wasser vom unteren Führungskopf angesaugt wird.

Bei einer anderen Alternative ist es bekannt, den Draht zunächst zu durchtrennen und die Einfädelung vom oberen zum unteren Führungskopf dann mit Hilfe eines externen Systems vorzunehmen.

Manchmal wird die Einfädelung auch mit Hilfe eines Rohres realisiert, durch das der Draht vom oberen zum unteren Führungskopf geschoben wird.

All diese Verfahren sind bis auf die Wasserstrahl-Einfädelung recht aufwendig. Auch hier schafft die vorliegende Erfindung jedoch Abhilfe. Es ist nämlich möglich, die bereits bekannte Wasserstrahl-Einfädeleinrichtung für offene Drahtführungen auch bei der vorliegenden Erfindung anzuwenden. Der innere Durchmesser der Toroidführung kann durch das Vorsehen des Drahtlagesensors derart groß gewählt werden, daß die Wasserstrahl-Einfädeleinrichtung den Draht durch die Toroidführung führt und dann einfädelt.

Ein weiterer Vorteil des vorstehend beschriebenen Wasserstrahl-Einfädelsystems für offene Drahtführungen (beispielsweise ebenfalls von der Firma AGIE bekannt) besteht darin, daß es neben den entsprechend ausgelegten Drahtführungsköpfen keine weiteren externen Einrichtungen benötigt. Es erfordert auch keine spezielle Behandlung des Drahtes und ist außerdem äußerst zuverlässig.

Bei einem weiteren bevorzugten Ausführungsbeispiel der Erfindung ist der Durchmesser der geschlossenen Drahtführung wenigstens doppelt so groß wie der Durchmesser der Drahtelektrode. Besonders vorteilhaft beträgt das Grössenverhältnis zwischen dem Durchmesser der geschlossenen Drahtführung und dem Durchmesser der Drahtelektrode vorzugsweise etwa 10 zu 1. Der besonders bevorzugte Innendurchmesser der Toroidführung liegt bei ca. 2,5mm und die üblicherweise verwendete Drahtelektrode hat einen Durchmesser von ca. 0,3mm. Damit wird die Bedingung "10 zu 1" beispielsweise in etwa erfüllt. Drahtelektroden sind bei einer derartigen Auslegung der Toroidführungen zuverlässig mit der Wasserstrahl-Einfädeleinrichtung einfädelbar.

Bei einem weiteren bevorzugten Ausführungsbeispiel der Erfindung ist wenigstens einer der geschlossenen Drahtführungen eine weitere offene Drahtführung, insbesondere eine V-Führung, zugeordnet. Diese Kombination aus offener Führung und V-Führung ist ganz besonders vorteilhaft, denn bei kleineren Konikwinkeln und vertikalen Schnitten übernimmt die offene Führung allein die Führung des Drahtes. Lediglich bei konischen Schnitten größeren Neigungswinkels (z.B. > 2°) übernimmt die Toroidführung die Führung des Drahtes. Diese Idee kombiniert sozusagen die Vorteile der Toroidführung mit denen der offenen Führung, übernimmt aber nicht deren Nachteile. Der Toroid kann einen so großen Durchmesser aufweisen, daß auch das automatische Wasserstrahleinfädeln besonders einfach realisierbar ist.

Bei einer weiteren besonders bevorzugten Ausgestaltung der Erfindung ist die Drahtelektrode - in Drahtvorspulrichtung gesehen - zunächst um eine Stromzuführung geführt, die der Drahtelektrode im Bezug zu ihrer Ruhelage eine Vorspannung verleiht, dann in der offenen V-Führung geführt, läuft dann am Drahtlagesensor vorbei, durchquert die geschlossene Führung, durchläuft daraufhin das Werkstück und ist nach dem Durchlaufen des Werkstückes hinter dem Werkstück wieder in einer offenen V-Führung geführt. Dabei misst der Drahtlagesensor bei Winkeln z.B. < 2° (also im Bereich der V-Führung) - die Bauchung der Drahtelektrode und bei größeren Winkeln die Drahtlage im Toroid. Zusätzlich kann hinter der Toroidführung ein weiterer Drahtlagesensor vorgesehen sein.

Die Erfindung ermöglicht zusammenfassend eine Vermeidung des Austausches der Drahtführung bei unterschiedlichem Ø des Drahtes und führt damit zu weniger Maschinenstillstand. Zusätzlich werden weitere Operationen zur Einfädelung des Drahtes vermieden, was wiederum die Funktions-Zuverlässigkeit erhöht.

Ausfürungsbeispiele der Erfindung werden im folgenden anhand der Figuren näher erläutert.

In den Zeichnungen zeigen:
- Fig. 1: eine schematische Ansicht eines bevorzugten Ausführungsbeispiels der Erfindung;
- Fig. 2: eine weitere schematische Ansicht des Ausführungsbeispiels aus Fig. 1 in einem anderen Arbeitszustand;
- Fig. 3: eine schematische Ansicht wichtiger Elemente eines weiteren Ausführungsbeispiels der Erfindung;
- Fig. 4: eine schematische Ansicht wichtiger Elemente eines dritten Ausführungsbeispiels der Erfindung;
- Fig. 5: eine weitere schematische Ansicht des Ausführungsbeispiels aus Fig. 1 bei einem Antastvorgang an ein Werkstück;
- Fig. 6: ein weiteres Ausführungsbeispiel der Erfindung.

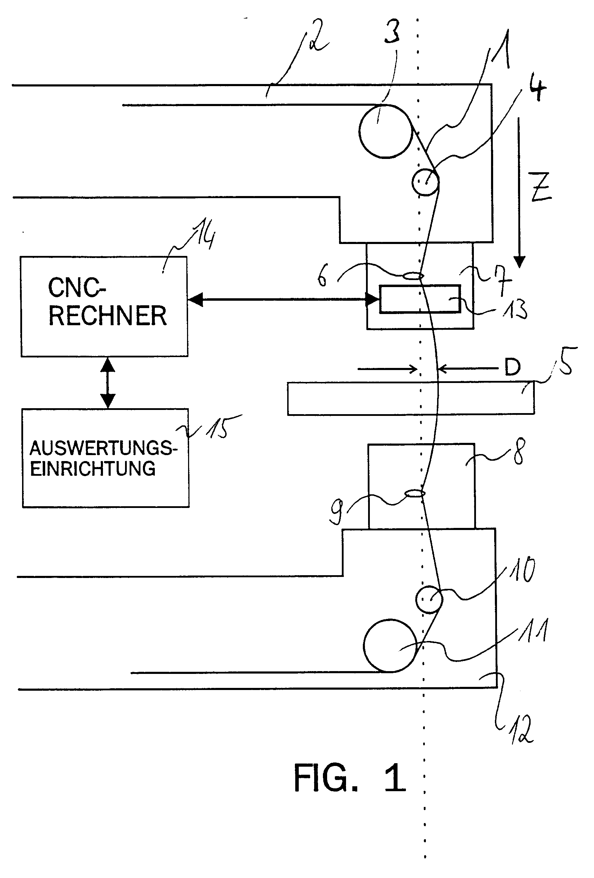

Zunächst sei das erste Ausführungsbeispiel der Fig. 1 beschrieben. Dabei wird im folgenden eine Terminologie verwendet, die der leichteren Lesbarkeit der Beschreibung dient, jedoch nicht einschränkend zu verstehen ist. Beispielsweise beziehen sich die Ausdrücke oben, unten, schmaler, breiter auf Maschinen üblicher Arbeitsaufstellung und Größe sowie auf in üblicher Weise angeordnete Werkstücke. Auch ist der Maßstab der Fig. 1-5 natürlich lediglich anschaulich zu verstehen.

Fig. 1 beschränkt sich auf eine rein schematische Darstellung erfindungswesentlicher Teile einer erfindungsgemäßen funkenerosiven Schneidvorrichtung. Grundelemente wie Spülsystem und Generator sind nicht dargestellt, da sie als selbstverständlich gelten.

Eine beim erosiven Schneiden mit elektrischen Impulsen beschickte Drahtelektrode 1 wird in der durch einen Pfeil Z dargestellten Drahttransportrichtung von "oben" nach "unten" vorgespult. Die von einer (nicht dargestellten) Vorratsrolle abgespulte Drahtelektrode 1 umläuft zunächst einige Umlenkrollen eines oberen Maschinenarmes 2, von denen lediglich eine einzelne Umlenkrolle 3 in Fig. 1 dargestellt ist. Dann umläuft die Drahtelektrode 1 eine Stromzuführung 4, die in üblicher Weise zur Zuführung der vom Generator der funkenerosiven Schneidvorrichtung abgegebenen elektrischen Impulse dient. Die Stromzuführung 4 sorgt auch für eine gewisse Vorspannung der Drahtelektrode 1 im Bezug zur gestrichelt gezeichneten Senkrechten - auch Ruhelage des Drahtes genannt. In Bezug auf die Drahtvorspulrichtung Z ist hinter der Stromzuführung 4 oberhalb eines zu schneidenen Werkstückes 5 eine geschlossene Drahtführung - hier eine (perspektivisch angedeutete) Toroidführung 6 - in einem oberen Führungskopf 7, der in UV-Richtung verschieblich geführt ist, angeordnet.

Hinter bzw. unter dem (in XY-Richtung veschiebbaren) Werkstück 5 liegt ein zweiter Führungskopf 8, in dem eine weitere Toroidführung 9 angeordnet ist. Nach dem Durchlaufen des Werkstückes 5 durchquert die Drahtelektrode 1 zunächst die Toroidführung 9, bevor sie um eine zur oberen Stromzuführung 4 analoge untere Stromzuführung 10 und eine Umlenkrolle 11, die an einem unteren Maschinenarm 12 befestigt ist, einem (nicht dargestellten) Entsorgungsbehälter zugeführt wird.

Kurz hinter (oder ggf. auch vor) der Toroidführung 6 ist, in Drahtvorspulrichtung gesehen, ein Drahtlagesensor 13 (kurz DLS genannt) angeordnet. Der Drahtlagesensor 13 ist an einen CNC-Steuerungsrechner 14 angeschlossen, der wiederum Zugriff auf eine Auswertungs-Einrichtung 15 bzw. eine entsprechende Softwareroutine hat.

Die gestrichelt eingezeichnete Senkrechte gibt die Ruhelage der Drahtelektrode 1 bei einem vertikalen Schnitt an. Da der Durchmesser der Toroidführungen 6, 9 relativ groß im Verhältnis zum Drahtdurchmesser ist, sind die Toroidführungen 6, 9 derart angeordnet, daß der Draht bei einem vertikalen Schnitt nicht etwa frei in der Mitte der Toroidführungen "schwebt", sondern definiert am inneren Rand der Toroide 6, 9 anliegt. Mit Hilfe des Drahtlagesensors 13 ist jetzt bei einem vertikalen Schnitt die Bauchung des Drahtes messbar. Die maximale Abweichung D der Bauchung zur Ruhelage beträgt typischerweise einige µm. Aus der gemessenen Bauchung in Höhe des Drahtlagesensors 13 und dem Bezugspunkt "Drahtführung" wird die Bauchung D der Drahtelektrode 1 im Bereich des Werkstückes 5 berechnet. Die an sich nicht sehr hohe Genauigkeit von Toroidführungen wird zusammenfassend durch den Einsatz des Drahtlagesensors entscheidend erhöht.

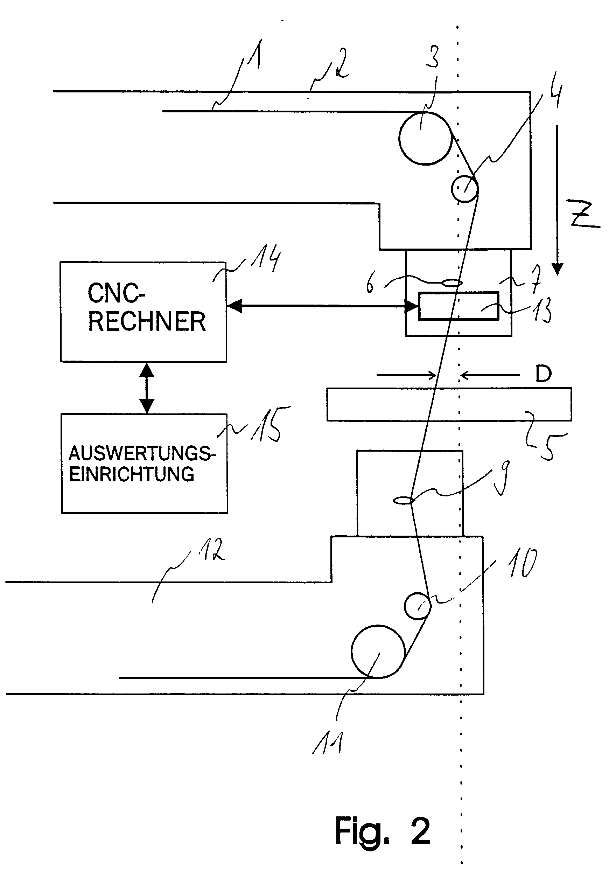

Fig. 2 zeigt einen konischen Schnitt mit einer Schrägstellung der Drahtelektrode 1 zu ihrer Ruhelage (gestrichelt). Dabei wurden der Einfachheit halber in Fig. 2 lediglich die relativen Positionen der Maschinenarme 2, 12 zueinander verschoben. Der Drahtlagesensor 13 ist derart nah zur oberen Toroidführung 6 angeordnet, daß die Lage des Drahtes 1 in der Toroidführung 6 präzise messbar ist. Je nach Richtung des konischen Schnittes liegt die Drahtelektrode 1 an einer anderen Stelle des inneren Umfanges der Toroide 6, 9 an. Die Drahtlage ist dennoch stets präzise messbar.

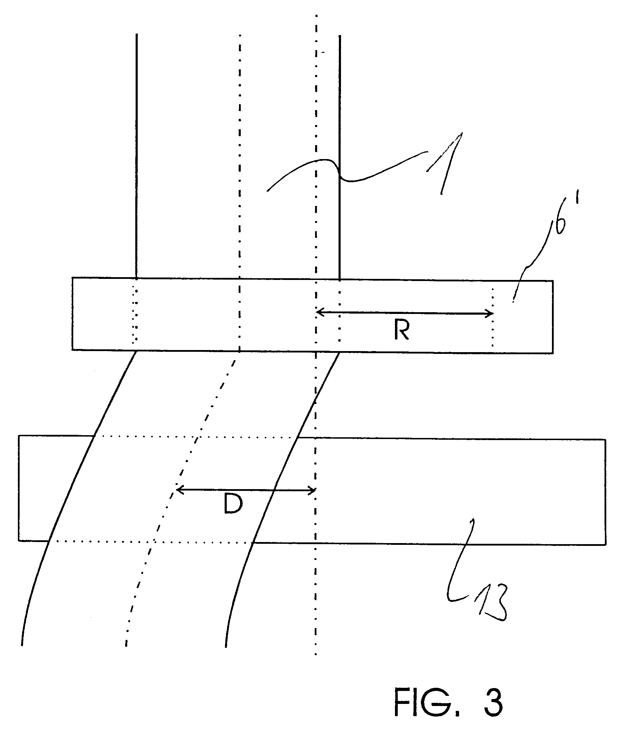

Bei dem in Fig. 3 gezeigten - stark vergrößert dargestellten - Ausführungsbeispiel der Erfindung ist der Durchmesser der Drahtelektrode 1 nur ca. um 2/5 kleiner als der innere Durchmesser der geschlossenen Drahtführung 6'. Dies entspricht in etwa der Situation, daß die Drahtführung 6' einen inneren Durchmesser von z.B. 20 µm, die Drahtelektrode 1 aber einen Durchmesser von lediglich 13 µm aufweist. In diesem Fall braucht die Drahtführung 6' nicht in jedem Fall gegen eine Drahtführung mit einem Durchmesser von ebenfalls ca. 13 µm ausgetauscht zu werden. Die Messung der Drahtlage gewährleistet u.U. auch ohne eine präzise Bestimmung der Drahtlage in der Drahtführung, allein anhand der messbaren relativen Abweichung zur hier durch die Mittelachse der Führung 6' verlaufenden Ruhelage eine genügende Präzision der Drahtlageberechnung.

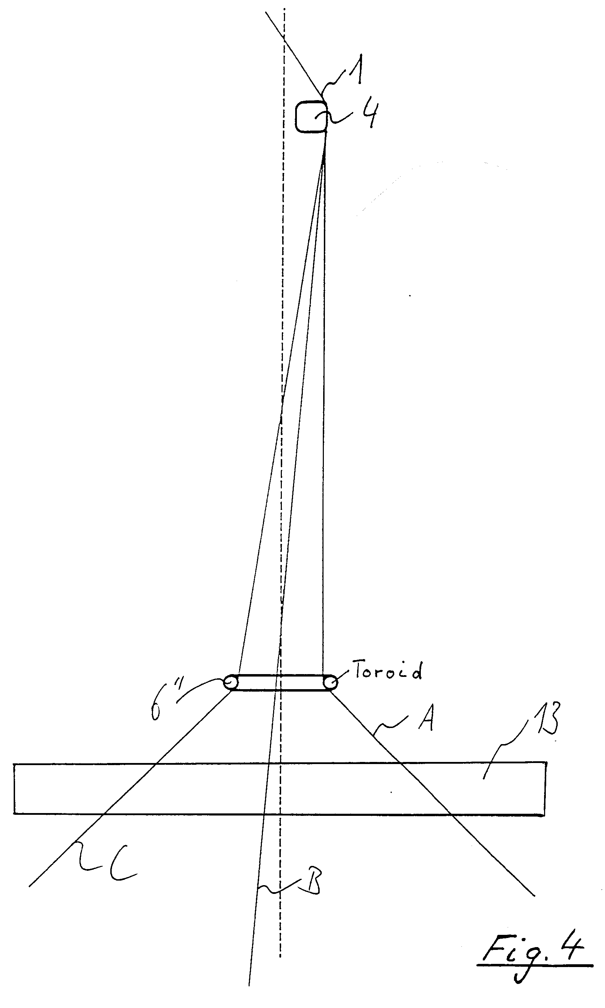

Fig. 4 zeigt ein weiteres Ausführungsbeispiel der Erfindung. Hier soll dargestellt werden, daß es auch möglich ist, einen Toroid 6'' recht großen Durchmessers im Vergleich zum Drahtelektrodendurchmesser zu verwenden. Bei den dargestellten konischen Schnitten A und C liegt der Draht innen an der Toroidführung 6'' an. Beim Schnitt B liegt er zwar nicht an ihr an, der Drahtlagesensor 13 gewährleistet jedoch eine Messung der Drahtlage.

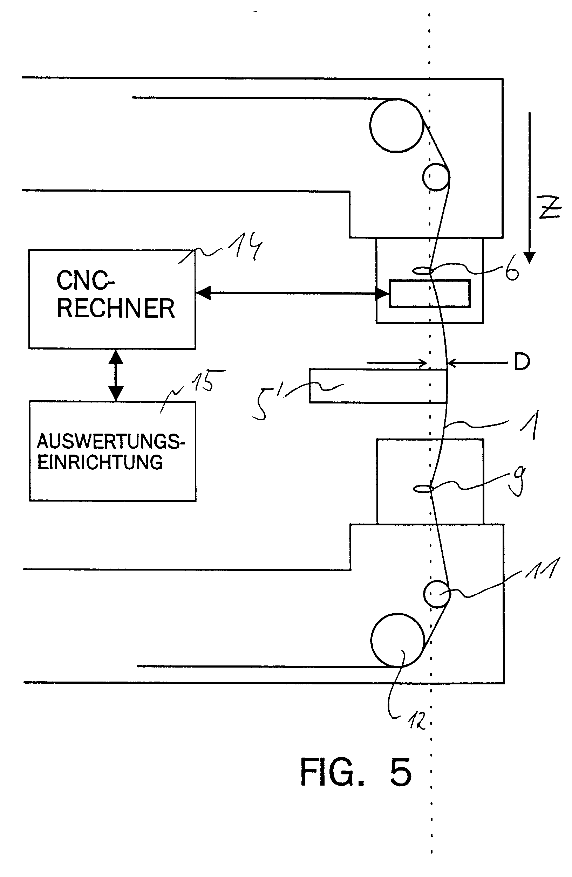

Fig. 5 veranschaulicht einen Antastvorgang an ein Werkstück 5'. Mit dem Drahtlagesensor 13 ist eine schnelle, einfach durchzuführende, präzise Antastung der Drahtelektrode 1 an das zu schneidende Werkstück 5' durchführbar. Beim Antasten wird das Werkstück in XY-Richtung an den Erodierdraht 1 herangefahren. Beim Erreichen des Werkstückes 5' entsteht eine Bauchung mit einem Abstand D zur gestrichelten Ruhelage. Mit Hilfe der entsprechend ausgelegten Auswertungseinrichtung 15, die beim Antasten z.B. auf eine Bauchung von 3µm anspricht, kann der Antastvorgang zuverlässig durchgeführt werden. Auch Schmutzschichten auf dem Werkstück stören dabei nicht. Dieses "Drahtlagesensor-Antasten" ist selbstverständlich nicht auf Toroidführungen beschränkt, sondern kann auch bei offenen Drahtführungen eingesetzt werden.

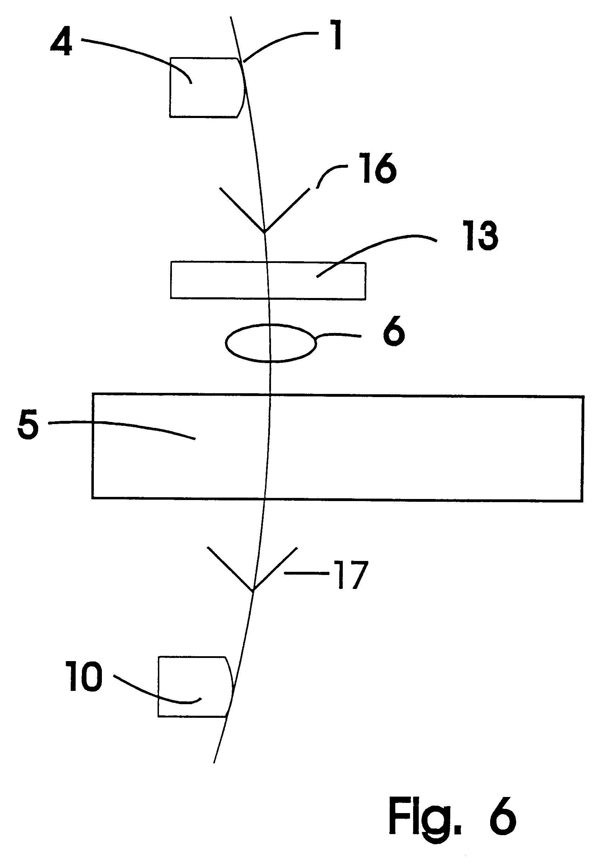

Fig. 6 zeigt ein Ausführungsbeispiel der Erfindung, bei dem der oberen geschlossenen Drahtführung 6 eine offene Drahtführung 16, hier eine V-Führung, zugeordnet ist. Bei kleineren Konikwinkeln bzw. Schnitten in einem (gedachten) Kegel mit einem Öffnungswinkel <2° zur Ruhelage misst der hinter der offenen Führung angeordnete Drahtlagesensor 13 die Bauchung des Drahtes. Bei konischen Schnitten >2° übernimmt die geschlossene Toroidführung 6 die Führung des Drahtes. Da der Drahtlagesensor 13 hier "vor" bzw. "über" der Toroidführung 6 angeordnet ist, kann dann mit Hilfe des Drahtlagesensors 13 die Lage der Drahtelektrode 1 im Toroid 6 präzise bestimmt werden. Die Bauchung des Drahtes 1 kann dann beispielsweise durch einen zusätzlichen Drahtlagesensor ermittelt werden oder es wird auf eine Bauchungsmessung bei konischen Schnitten >2° verzichtet. Hinter dem Werkstück 5 ist hier keine geschlossene, sondern ebenfalls eine offene V-Führung 17 vorgesehen, der jedoch vorteilhaft auch eine geschlossene Führung 6 zugeordnet werden kann. Vorteilhaft wird diese Variante der Erfindung derart ausgelegt, daß die durch die Stromzuführung 4 bewirkte "konische" Vorspannung der Drahtelektrode 1 so groß ist, daß die Drahtelektrode 1 bei konischen Schnitten zumindest solange sicher in der V-Führung 16 liegt, bis er den Innenrand der Toroidführung 6 bei größer werdenden Konikwinkeln erreicht und diese die Drahtführung übernimmt. Es ist außerdem vorteilhaft, Vorspannung des Drahtes, Toroiddurchmesser und u.U. auch den Drahtdurchmesser im Bezug zu den Konstruktionsdimensionen (d.h. insbesondere die Entfernung der Elemente voneinander) einander anzupassen.

## Patentansprüche

1. Vorrichtung zum funkenerosiven Schneiden eines Werkstückes (5) mit einer in wenigstens einer Drahtführung (6,9) geführten Drahtelektrode (1), wobei - in Drahtvorschubrichtung gesehen - die eine Drahtführung (6) vor und die ggf. andere Drahtführung (9) hinter dem Werkstück (5) angeordnet ist, und wobei wenigstens ein Drahtlagesensor (13) derart an der Vorrichtung angeordnet ist, daß mit ihm die Lage der Drahtelektrode (1) quer zu ihrer Achse bestimmbar ist,
**dadurch gekennzeichnet, daß**
die wenigstens eine Drahtführung (6,9) eine geschlossene Drahtführung ist (6,9) deren Öffnung so groß ist, daß die Drahtelektrode (1) beim vertikalen Durchgang durch diese Drahtführung (6,9) mit deren Innenflächen nicht in Berührung gelangt, und daß der wenigstens eine Drahtlagesensor (13) in unmittelbarer Nähe zur geschlossenen Drahtführung (6,9) angeordnet ist, so daß mit ihm die Lage der Drahtelektrode (1) in der geschlossenen Drahtführung (6,9) meßbar ist.

2. Vorrichtung nach Anspruch 1, dadurch gekennzeichnet, daß die geschlossene Drahtführung eine Toroidführung (6,9) ist.

3. Vorrichtung nach einem der Ansprüche 1 oder 2, gekennzeichnet durch eine Drahteinfädel-Einrichtung, insbesondere nach Art einer Wasserstrahl-Einfädelung.

4. Vorrichtung nach einem der Ansprüche 1 bis 3, dadurch gekennzeichnet, daß der Durchmesser der geschlossenen Drahtführung (6,9) wenigstens doppelt so groß ist wie der Durchmesser der Drahtelektrode (1).

5. Vorrichtung nach einem der Ansprüche 1 bis 4, dadurch gekennzeichnet, daß das Größenverhältnis zwischen dem Durchmesser der geschlossenen Drahtführung (6,9) und dem Durchmesser der Drahtelektrode (1) vorzugsweise etwa 10 zu 1 beträgt.

6. Vorrichtung nach einem der Ansprüche 1 bis 5, dadurch gekennzeichnet, daß wenigstens einer der geschlossenen Drahtführungen (6) eine offene Drahtführung, insbesondere eine V-Führung (16), zugeordnet ist.

7. Vorrichtung nach einem der Ansprüche 1 bis 6, dadurch gekennzeichnet, daß die Drahtelektrode (1) - in Drahtvorspulrichtung gesehen:
A) zunächst um eine Stromzuführung (4) geführt ist, die der Drahtelektrode (1) im Vergleich zu ihrer Ruhelage eine Vorspannung verleiht,
B) dann in der offenen V-Führung (16) geführt ist,
C) dann am Drahtlagesensor (13) vorbeiläuft,
D) dann die geschlossene Führung (6) durchquert,
E) daraufhin das Werkstück (5) durchläuft und
F) nach dem Durchlaufen des Werkstückes (5) hinter dem Werkstück wieder in einer offenen V-Führung (17) geführt ist.

8. Verfahren zum funkenerosiven Schneiden eines Werkstückes mit einer Vorrichtung gemäß einem der Patentansprüche 1 - 7,
dadurch gekennzeichnet, daß
das Ergebnis der Drahtlagemessung zur Antastung der Drahtelektrode (1) an das Werkstück und zur Bestimmung der Drahtlage in der Drahtführung (6,9) ausgewertet wird.

## Claims

1. Device for the cutting by spark erosion of a workpiece (5) having a wire electrode (1) guided in at least one wire guide (6, 9), the single wire guide (6) being arranged in front of the workpiece (5), viewed in the wire feed direction, and if the occasion arises the other wire guide (9) being arranged behind the workpiece, and at least one wire position sensor (13) being arranged on the device such that with it the position of the wire electrode (1) transverse to the axis of the same can be determined,
characterised in that
the at least single wire guide (6, 9) is a closed wire guide (6, 9) the opening of which is of such a size that the wire electrode (1) in its vertical passage through this wire guide (6, 9) does not come into contact with the inner surfaces of the latter, and that the at least single wire position sensor (13) is arranged in the immediate vicinity of the closed wire guide (6, 9) so that with it the position of the wire electrode (1) in the closed wire guide (6, 9) is measurable.

2. Device according to Claim 1, characterised in that the closed wire guide is a toroidal wire guide (6, 9).

3. Device according to one of the Claims 1 or 2, characterised by a wire threading device, especially according to the type of a water-jet threading system.

4. Device according to one of the Claims 1 to 3, characterised in that the diameter of the closed wire guide (6, 9) is at least twice as large as the diameter of the wire electrode (1).

5. Device according to one of the Claims 1 to 4, characterised in that the size ratio between the diameter of the closed wire guide (6, 9) and the diameter of the wire electrode (1) amounts preferably to approximately 10 to 1.

6. Device according to one of the Claims 1 to 5, characterised in that an open wire guide, especially a V-guide (16) is assigned to at least one of the closed wire guides (6).

7. Device according to one of the Claims 1 to 6, characterised in that, viewed in the forward winding direction of the wire, the wire electrode (1):
A) is first guided round a power lead (4) which lends the wire electrode (1) an initial tension in comparison with its rest position,
B) is then guided in the open V-guide (16),
C) then runs past the wire position sensor (13),
D) then traverses the closed guide (6),
E) thereupon passes through the workpiece (5) and
F) after passing through the workpiece (5), behind the workpiece is guided again in an open V-guide (17).

8. Method for the cutting of a workpiece by spark erosion with a device according to one of the Patent Claims 1-7, characterised in that the result of the wire position measurement for contacting the wire electrode (1) on the workpiece and for determining the position of the wire in the wire guide (6, 9) is evaluated.

## Revendications

1. Dispositif de coupe par étincelage d'une pièce d'usinage (5), comprenant un fil-électrode (1) guidé au moins dans un guidage (6, 9) du fil où un des guidages du fil (6) - vu dans le sens du dévidage du fil - est disposé devant la pièce d'usinage (5), et où l'autre guidage du fil (9) est placé, le cas échéant, derrière la pièce d'usinage, et où au moins un capteur (13) de position du fil est disposé de façon telle sur le dispositif que l'on peut, avec ce capteur, déterminer la position du fil-électrode (1) transversalement par rapport à son axe,
caractérisé
en ce que au moins un des guidages (6, 9) du fil est un guidage fermé (6, 9) du fil dont l'ouverture est dimensionnée de façon telle que le fil-électrode (1), lors du passage vertical à travers ce guidage (6, 9) du fil, ne vient pas en contact avec les surfaces intérieures du guidage,
et en ce que au moins le capteur (13) de position du fil est disposé à proximité immédiate du guidage fermé (6, 9) du fil, de sorte que le capteur permet de mesurer la position du fil-électrode (1) dans le guidage fermé (6, 9) du fil.

2. Dispositif selon la revendication 1, caractérisé en ce que le guidage fermé du fil est un guidage toroïdal (6, 9).

3. Dispositif selon la revendication 1 ou 2, caractérisé par un dispositif d'enfilage du fil, notamment suivant la technique d'enfilage par jet d'eau.

4. Dispositif selon l'une quelconque des revendications 1 à 3, caractérisé en ce que le diamètre du guidage fermé (6, 9) du fil est au moins le double du diamètre du fil-électrode (1).

5. Dispositif selon l'une quelconque des revendications 1 à 4, caractérisé en ce que le rapport de proportion entre le diamètre du guidage fermé (6, 9) du fil et le diamètre du fil-électrode (1) est, de préférence, de 10 à 1 environ.

6. Dispositif selon l'une quelconque des revendications 1 à 5, caractérisé en ce qu'un guidage ouvert du fil, notamment un guidage (16) en V, est affecté au moins à un des guidages fermés (6) du fil.

7. Dispositif selon l'une quelconque des revendications 1 à 6, caractérisé en ce que le fil-électrode (1), vu dans le sens de dévidage du fil,
A) est d'abord guidé autour d'une arrivée de courant (4) qui confère une pré-tension au fil-électrode (1) par rapport à sa position de repos,
B) puis suit le guidage ouvert (16) en V,
C) puis passe devant le capteur (13) de position du fil,
D) puis traverse le guidage fermé (6),
E) traverse ensuite la pièce d'usinage (5), et
F) après avoir traversé la pièce d'usinage (5), suit à nouveau un guidage ouvert (17) en V, placé derrière la pièce d'usinage.

8. Procédé de coupe par étincelage d'une pièce d'usinage, comprenant un dispositif selon l'une quelconque des revendications 1 à 7, caractérisé en ce que l'on exploite le résultat de la mesure de la position du fil pour que le fil-électrode (1) soit au contact de la pièce d'usinage et pour déterminer la position du fil dans le guidage du fil (6, 9).
